(19) Europäisches Patentamt
European Patent Office
Office européen des brevets

(11) **EP 2 356 429 B1**

(12) **FASCICULE DE BREVET EUROPEEN**

(45) Date de publication et mention de la délivrance du brevet:
**05.06.2019 Bulletin 2019/23**

(21) Numéro de dépôt: **09797092.5**

(22) Date de dépôt: **26.11.2009**

(51) Int Cl.:
**G01N 21/51** *(2006.01)*     *G01N 21/47* *(2006.01)*

(86) Numéro de dépôt international:
**PCT/FR2009/052303**

(87) Numéro de publication internationale:
**WO 2010/061137 (03.06.2010 Gazette 2010/22)**

(54) **DISPOSITIF D'ANALYSE D'UN MELANGE POLYPHASIQUE VIA UN FAISCEAU DE LUMIERE RETRODIFFUSEE PAR CELUI-CI**

VORRICHTUNG ZUR ANALYSE EINES MEHRPHASENGEMISCHS ÜBER EINEN DURCH DAS GEMISCH ZURÜCKGESTREUTEN LICHTSTRAHL

DEVICE FOR ANALYZING A POLYPHASE MIXTURE VIA A LIGHT BEAM BACKSCATTERED BY SAID MIXTURE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **26.11.2008   FR 0858030**

(43) Date de publication de la demande:
**17.08.2011   Bulletin 2011/33**

(73) Titulaire: **Formulaction**
**31240 L'Union (FR)**

(72) Inventeur: **BRUNEL, Laurent**
**F-26380 Peyrins (FR)**

(74) Mandataire: **Cabinet Morelle & Bardou SC**
**Parc Technologique du Canal**
**9, avenue de l'Europe**
**BP 72253**
**31522 Ramonville Saint Agne Cedex (FR)**

(56) Documents cités:
| | |
|---|---|
| **EP-A- 1 241 467** | **WO-A-2005/001449** |
| **WO-A-2006/023470** | **WO-A-2008/092537** |
| **FR-A- 2 841 983** | **GB-A- 2 420 403** |
| **US-A- 4 028 553** | **US-A- 5 120 979** |
| **US-A- 5 523 560** | |

EP 2 356 429 B1

**Description**

La présente invention se rapporte à un dispositif d'analyse d'un mélange polyphasique via un faisceau de lumière rétrodiffusée par celui-ci, comprenant :

- une cellule dotée d'une composante de contenance d'extension verticale, apte à loger le mélange polyphasique,
- des moyens émetteurs d'un faisceau lumineux en direction de la cellule, de telle sorte que le faisceau lumineux s'étende dans un plan vertical couvrant au moins une hauteur de cellule apte à loger le mélange polyphasique,
- des moyens récepteurs du faisceau de lumière rétrodiffusée par ledit mélange polyphasique, couvrant une hauteur de faisceau de lumière rétrodiffusée s'étendant sur la hauteur de cellule apte à loger le mélange polyphasique.

On connaît un tel dispositif par exemple avec le document US 2002/0147563. La mesure du faisceau de lumière rétrodiffusée avec le dispositif selon ce document n'est pas satisfaisante. En effet, tout éloignement de la cellule, des moyens récepteurs en rétrodiffusion, entraîne une forte perte de résolution spatiale de la mesure.

On connaît en outre le document EP 1 241 467 qui se rapporte à un appareil d'inspection et à un système d'inspection des corps étrangers dans des conteneurs remplis avec un liquide. Le dispositif de contrôle décrit dans ce document comprend notamment une source lumineuse qui envoie une lumière rayonnante vers le contenant transparent, un moyen de prise d'images de la lumière de réflexion irrégulière réfléchie par les corps étrangers contenus dans le liquide, un moyen de traitement des images détectant des corps étrangers dans le liquide.

On connaît en outre le document WO 2008/092537 qui se rapporte à un dispositif de caractérisation optique, dans lequel un échantillon est disposé dans un réceptacle transparent à la lumière, une caméra étant prévue pour détecter l'échantillon. Une première source de lumière est disposée de telle manière que l'échantillon soit éclairé à travers une direction contraire à la ligne de vue de la caméra. Une deuxième source de lumière est disposée du même côté que la caméra, et une source laser est disposée de travers par rapport à la ligne de vue de la caméra. Dans le dispositif de ce document, il est également possible d'observer la rétrodiffusion d'une ligne laser.

On connaît également le document FR 2 841 983 au nom de la demanderesse, qui se rapporte à procédé et un dispositif permettant de mesurer un flux lumineux rétrodiffusé par un milieu dispersé, non perturbé par les réflexions aux interfaces ; le dispositif permet de mesurer un flux lumineux rétrodiffusé par un milieu dispersé placé d'un premier coté d'une paroi, par interaction avec une pluralité de rayons lumineux émis du deuxième côté de la paroi opposé au premier côté où est placé le milieu dispersé et en direction de ce dernier, la pluralité de rayons lumineux étant apte à traverser la paroi et étant rétrodiffusée au moins partiellement par le milieu dispersé en direction de moyens de réception placés du deuxième côté de la paroi, cette dernière étant apte à être traversée par les rayons lumineux émis et rétrodiffusés, et à être en contact avec le milieu dispersé. Le dispositif comprend :

- des moyens d'émission, vers la paroi, d'un rayonnement lumineux apte à traverser cette paroi et atteindre le milieu dispersé, de sorte que ce dernier puisse émettre à son tour, à travers la paroi, une pluralité de rayons lumineux rétrodiffusés en vue de former une tache de rétrodiffusion dans laquelle est définie au moins une zone centrale en forme de disque dont le centre correspond au barycentre lumineux de la tache de rétrodiffusion et dont le rayon est égal à quatre fois le libre parcours de transport maximum $l^*_{max}$ du milieu dispersé, la tache de rétrodiffusion étant apte à être imagée au moins en partie sur les moyens de réception,
- des moyens de réception du rayonnement lumineux rétrodiffusé par le milieu dispersé à travers la paroi et destiné à former la tache de rétrodiffusion, ces moyens de réception couvrant au moins une direction s'étendant à partir du barycentre lumineux de ladite tache,
- des moyens de suppression à partir des rayons lumineux rétrodiffusés par le milieu dispersé, des rayons lumineux issus de la zone centrale et ayant subi une réflexion totale sur la surface formant l'interface de la paroi avec le deuxième côté,
- des moyens de mesure d'un échantillonnage spatial du profil du flux lumineux reçu par une partie au moins des moyens de réception.

La présente invention a pour objet de pallier les inconvénients de l'état de l'art et d'apporter en outre d'autres avantages. Plus précisément, elle consiste en un dispositif d'analyse d'un mélange polyphasique comme défini par la revendication 1.

Le dispositif selon l'invention permet, grâce aux moyens optiques de conjugaison, une exploitation performante du signal transmis par le faisceau de lumière rétrodiffusée, en combinaison avec les moyens d'analyse du faisceau rétrodiffusé via les moyens optiques de conjugaison. Les moyens optiques de conjugaison permettent notamment de capter une partie du faisceau de lumière rétrodiffusée par un point du mélange polyphasique et de transmettre cette partie de faisceau en un point des moyens récepteurs ; ainsi, à un point déterminé du mélange, on fait correspondre un point déterminé des moyens récepteurs, par exemple un ou plusieurs pixels ou analogue, cette correspondance biunivoque optimisant l'exploitation du signal lumineux transmis par le point du mélange rétrodiffusant de la lumière, en le séparant des points du mélange rétrodiffusant de la lumière et se trouvant à proximité. Les moyens optiques de conjugaison combinés avec la forme de ligne verticale du faisceau lumineux d'épaisseur spécifique telle que définie, permettent d'obtenir un profil d'analyse du mélange sur la hauteur analysée qui dépend bien des propriétés diffusives du mélange et non pas de la ligne verticale de lumière.

Selon une caractéristique avantageuse, les moyens optiques de conjugaison comportent des moyens collecteurs et focalisateurs de ladite partie au moins du faisceau de lumière rétrodiffusée, du type lentille biconvexe.

Cette caractéristique permet une relation biunivoque mise en pratique de manière avantageuse, entre des points du mélange polyphasique qui s'étendent sur la hauteur de cellule illuminée par le faisceau lumineux qui s'étend lui-même dans un plan vertical et qui rétrodiffusent de la lumière, et des points des moyens récepteurs, par exemple des pixels d'un capteur matriciel ou analogue, défini par une caméra.

Selon une caractéristique avantageuse, les moyens optiques de conjugaison, disposés entre la cellule et les moyens récepteurs du faisceau de lumière rétrodiffusée par le mélange polyphasique, sont agencés de telle sorte que la hauteur des moyens récepteurs soit inférieure à la hauteur de cellule apte à loger ledit mélange polyphasique.

Cette caractéristique permet de réduire la taille des moyens récepteurs, plus particulièrement la taille du capteur matriciel ou analogue, et donc de réduire le coût du dispositif tout en bénéficiant d'une analyse sur la hauteur totale de la cellule. L'agencement correspondant est avantageusement obtenu par une forme et une disposition appropriées des moyens optiques de conjugaison entre la cellule et le capteur matriciel ou analogue, en sorte de choisir selon les besoins un grandissement optique approprié généré par les moyens optiques de conjugaison.

Selon une caractéristique avantageuse, le dispositif selon l'invention comporte en outre des moyens de focalisation du faisceau lumineux émis en direction de la cellule, pour focaliser ledit faisceau lumineux, pris dans une section transversale horizontale, à son interface entre la surface intérieure de la paroi de la cellule et le mélange polyphasique.

Cette caractéristique permet d'obtenir une finesse importante du faisceau lumineux impactant l'interface cellule-mélange, offrant ainsi une résolution d'analyse très importante.

Selon une caractéristique avantageuse, le dispositif selon l'invention comporte en outre des moyens d'extension du faisceau lumineux émis en direction de la cellule, pour étendre ce dernier dans un plan vertical couvrant au moins la hauteur de cellule apte à loger ledit mélange polyphasique, de telle sorte que le faisceau lumineux soit divergent dans ledit plan vertical à son interface entre la surface intérieure de la paroi de la cellule et le mélange polyphasique.

La projection d'un faisceau divergent sur la cellule de mesure permet d'adapter la hauteur de mesure à la hauteur du mélange à analyser dans la cellule, et plus largement la hauteur du faisceau lumineux impactant la cellule à la hauteur de la cellule, en modifiant l'angle de divergence du faisceau ou la distance entre les moyens générateurs du faisceau lumineux divergent et la cellule, en sorte de faire correspondre la hauteur de mélange analysé avec la hauteur du faisceau impactant la cellule à l'interface mélange-cellule. Ainsi, il est proposé un dispositif d'analyse plus souple d'emploi que le dispositif de l'art antérieur décrit plus haut, dans lequel les rayons du faisceau lumineux incident impactant la cellule, et destinés à être utilisés pour l'analyse, doivent être parallèles, en ce qu'il permet par exemple de changer de cellule facilement. En outre, le faisceau incident divergent permet d'utiliser des moyens émetteurs plus petits que la hauteur de cellule, et permet d'éviter en outre d'utiliser des moyens de focalisation trop grands et donc coûteux.

Selon une caractéristique avantageuse, lesdits moyens émetteurs du faisceau lumineux en direction de la cellule comprennent :

- des moyens générateurs d'un faisceau de lumière dont tous les rayons lumineux sont parallèles entre eux,
- lesdits moyens d'extension du faisceau lumineux émis en direction de la cellule étant interposés entre lesdits moyens générateurs d'un faisceau lumineux collimaté et la cellule.

Cette caractéristique permet d'utiliser une source génératrice de lumière peu onéreuse que l'on trouve couramment. Par le terme « collimaté », on entend ici un faisceau lumineux dont les rayons lumineux sont parallèles.

Selon une caractéristique avantageuse, lesdits moyens d'extension du faisceau lumineux émis en direction de la cellule comportent des moyens de lentille cylindrique concave divergente verticalement.

Selon une caractéristique avantageuse, lesdits moyens de focalisation sont disposés entre les moyens générateurs du faisceau de lumière collimatée et les moyens d'extension du faisceau lumineux dans le plan vertical.

Selon une caractéristique avantageuse, lesdits moyens émetteurs du faisceau lumineux en direction de la cellule comprennent des moyens générateurs d'au moins un faisceau de lumière divergent.

Selon une caractéristique avantageuse, lesdits moyens de focalisation comprennent des moyens de lentille convergente.

Selon une caractéristique avantageuse, lesdits moyens de focalisation comprennent des moyens de lentille cylindrique convergente horizontalement.

Selon une caractéristique avantageuse, lesdits moyens générateurs d'au moins un faisceau de lumière divergent, comportent une source lumineuse linéaire.

Selon une caractéristique avantageuse, ladite source lumineuse linéaire comporte une pluralité de sources lumineuses ponctuelles divergentes.

Selon une caractéristique avantageuse, la cellule apte à loger ledit mélange polyphasique adopte une forme cylindrique verticale droite.

Selon une caractéristique avantageuse, la cellule de forme cylindrique verticale droite adopte une section transversale circulaire.

D'autres caractéristiques apparaîtront à la lecture qui suit de plusieurs exemples de modes de réalisation d'un dispositif selon l'invention, accompagnée des dessins annexés, exemples donnés à titre illustratif non limitatif.

La figure 1 représente une vue en perspective schématique d'un premier exemple de mode de réalisation d'un dispositif selon l'invention d'analyse d'un mélange polyphasique au moyen d'un faisceau de lumière rétrodiffusée par celui-ci.

La figure 2 représente une vue en perspective schématique d'un deuxième exemple de mode de réalisation d'un dispositif selon l'invention, partiel, concernant les moyens émetteurs d'un faisceau lumineux en direction de la cellule.

La figure 3 représente une vue de dessus de l'exemple de la figure 2.

La figure 4 représente une vue de côté de l'exemple de la figure 2.

La figure 5 représente une vue de côté schématique partielle de l'exemple de la figure 1, relative aux moyens récepteurs du faisceau de lumière rétrodiffusée.

La figure 6 représente une vue similaire à la figure 5, montrant un détail du faisceau lumineux rétrodiffusé.

La figure 7 représente une vue de dessus de la figure 6 avec une cellule différente comportant une section transversale carrée.

La figure 8 représente une vue en perspective schématique d'un troisième exemple de mode de réalisation d'un dispositif selon l'invention, partiel, concernant les moyens émetteurs d'un faisceau lumineux en direction de la cellule.

La figure 9 représente une vue de dessus de l'exemple de la figure 8.

La figure 10 représente une vue de côté de l'exemple de la figure 8.

La figure 11 représente une vue en perspective schématique d'un quatrième exemple de mode de réalisation d'un dispositif selon l'invention, partiel, concernant les moyens émetteurs d'un faisceau lumineux en direction de la cellule.

La figure 12 représente une vue de dessus de l'exemple de la figure 11.

La figure 13 représente une vue de côté de l'exemple de la figure 11.

La figure 14 représente une vue de l'image de rétrodiffusion obtenue sur le capteur matriciel récepteur, pour un mélange quelconque.

La figure 15 représente un exemple de traitement de l'image selon la figure 14.

Les figures 16 à 18 se rapportent à un premier exemple d'utilisation d'un dispositif selon l'invention, pour l'étude d'une sédimentation.

Les figures 19 et 20 se rapportent à un deuxième exemple d'utilisation d'un dispositif selon l'invention, pour l'étude du crémage d'une émulsion.

Les figures 21 et 22 se rapportent à un troisième exemple d'utilisation d'un dispositif selon l'invention, pour l'étude de la coalescence d'une émulsion.

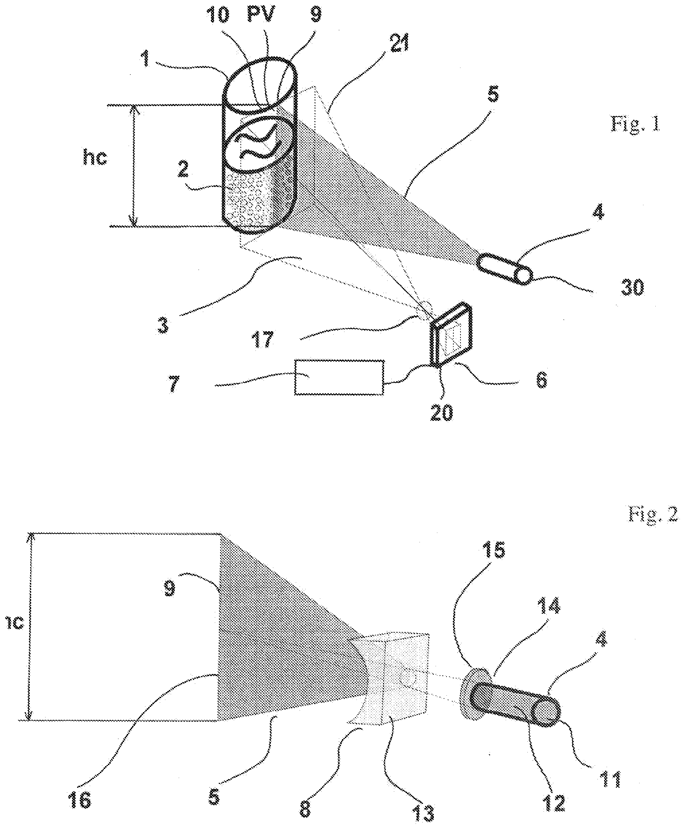

Le dispositif d'analyse d'un mélange polyphasique 2 via un faisceau de lumière rétrodiffusée 3 par celui-ci, représenté de manière schématique sur la figure 1 comprend:

- une cellule 1 dotée d'une composante de contenance d'extension verticale, apte à loger le mélange polyphasique 2,
- des moyens émetteurs 4 d'un faisceau lumineux 5 en direction de la cellule 1, de telle sorte que le faisceau lumineux 5 s'étende dans un plan vertical PV couvrant au moins une hauteur hc de la cellule 1 logeant le mélange polyphasique 2,
- des moyens récepteurs 6 d'une partie au moins du faisceau de lumière rétrodiffusée 3 par le mélange polyphasique 2, couvrant une hauteur de faisceau de lumière rétrodiffusée 3 s'étendant sur la hauteur hc de la cellule 1 logeant le mélange polyphasique 2,
- des moyens optiques de conjugaison 17, disposés entre la cellule 1 et les moyens récepteurs 6 d'une partie au moins du faisceau de lumière rétrodiffusée 3 par le mélange polyphasique 2,
- les moyens récepteurs 6 comportant un capteur matriciel 20 doté d'une pluralité de pixels ou analogue formant une surface de réception de la partie du faisceau de lumière rétrodiffusée 3 passant par les moyens optiques de conjugaison 17, s'étendant selon une direction verticale et une direction horizontale,
- des moyens d'analyse 7 de la partie du faisceau de lumière rétrodiffusée 3 par le mélange polyphasique 2 et reçue par le capteur matriciel 20 via les moyens optiques de conjugaison 17.

Le mélange polyphasique 2 analysé peut être de toute nature, par exemple un mélange polyphasique pour lequel on cherche à analyser les phases, notamment la détection et la mesure de phénomènes, par exemple naissants, de démixtion, de sédimentation dans des mélanges en fonction du temps, par exemple des émulsions ou des suspensions. Les domaines d'application du dispositif d'analyse selon l'invention comprennent en particulier l'industrie chimique et para-chimique, et plus largement tous les domaines pour lesquels il est nécessaire d'analyser la structure ainsi que la stabilité d'un mélange polyphasique ou de déceler la structure d'un mélange ou plus largement d'un milieu diffusant.

La cellule 1 dotée d'une composante de contenance d'extension verticale, apte à loger le mélange polyphasique 2, peut être par exemple une cellule adoptant une forme cylindrique verticale droite, par exemple adoptant une section transversale circulaire comme représenté sur la figure 1. D'autres formes de cellule et/ou de sections peuvent convenir, par exemple adoptant une section transversale polygonale, en particulier carré, dès lors qu'elles présentent une contenance comprenant une extension verticale selon laquelle la gravité peut exercer ses effets de préférence comportant au moins une partie de paroi rectiligne verticale illuminée par la faisceau lumineux 5.

Le dispositif comprend de préférence un support (non représenté) rigide et destiné à être posé sur une surface fixe par rapport à la gravité, qui permet de poser et de maintenir :

- la cellule 1 dans sa position verticale,
- les moyens émetteurs 4 du faisceau lumineux 5 en direction de la cellule 1, et
- les moyens récepteurs 6 d'un faisceau lumineux rétrodiffusé, comportant le capteur matriciel 20,
- les moyens optiques de conjugaison 17.

Les moyens d'analyse 7 peuvent se présenter sous la forme d'une électronique de gestion fixée au support ou disposée dans un boîtier connecté à celui-ci.

Selon l'exemple représenté sur la figure 1, le dispositif comporte avantageusement des moyens d'extension du faisceau lumineux 5 émis en direction de la cellule 1, pour étendre ce dernier dans le plan vertical PV couvrant au moins la hauteur hc de la cellule 1 logeant le mélange polyphasique 2, de telle sorte que le faisceau lumineux 5 soit divergent dans le plan vertical PV à son interface 9 entre la surface intérieure 10 de la paroi 18 de la cellule 1 et le mélange polyphasique 2. Toujours selon la figure 1, ces moyens d'extension sont obtenus grâce à des moyens émetteurs 4 du faisceau lumineux 5 en direction de la cellule 1 qui comprennent des moyens générateurs 30 d'au moins un faisceau de lumière 31 divergent. Les moyens générateurs 30 peuvent par exemple être constitués d'un générateur d'une ligne de lumière laser verticale divergente à la source dans un plan vertical.

Les moyens optiques de conjugaison 17 permettent, à chaque point de la figure de diffusion sur la surface du mélange analysé 2, de faire correspondre un point et un seul du capteur matriciel 20. La mesure du flux lumineux arrivant sur le capteur matriciel 20 sera ainsi équivalente à la mesure du flux surfacique en chaque point de la figure de diffusion. Selon une propriété de la lumière rétrodiffusée, en chaque point de l'interface paroi mélange, la lumière rétrodiffusée est émise avec une intensité égale dans toutes les directions. Le demandeur a ainsi constaté que l'intensité sur le capteur correspond à celle émise par le produit même si l'optique de collection est placée de sorte qu'elle reçoit la lumière de chaque point de la surface du mélange sous des angles différents.

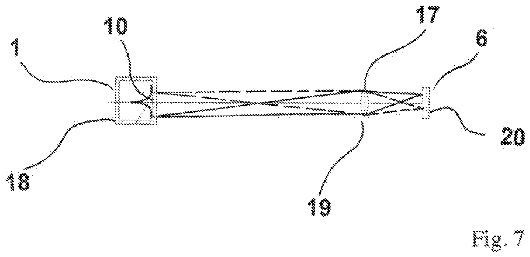

Les moyens optiques de conjugaison 17, tels que représentés sur les figures 1, 5, 6 ou 7, comportent avantageusement des moyens collecteurs et focalisateurs d'une partie du faisceau de lumière rétrodiffusée, du type lentille simple biconvexe 19 comme représenté sur les figures, ou d'un type optiquement équivalent, par exemple un doublet ou un triplet, ou analogue. La partie du faisceau de lumière rétrodiffusée 3 collectée par les moyens optiques de conjugaison 17 s'étend en outre dans la direction horizontale, comme représenté sur les figures 1 et 7, en sorte de collecter des informations sur la lumière rétrodiffusée de part et d'autre de la ligne verticale de lumière incidente sur la cellule 1, par exemple sur l'ensemble de la paroi éclairée dans le cas d'une cellule 1 de section transversale polygonale, notamment carrée ou rectangulaire comme représenté sur la figure 7, ou sur une partie en arc de cylindre de la cellule 1 à section transversale circulaire, pour laquelle la ligne verticale de lumière incidente se trouve en position sensiblement médiane, comme représenté sur la figure 1.

Les moyens optiques de conjugaison 17, disposés entre la cellule 1 et les moyens récepteurs 6 du faisceau de lumière rétrodiffusée 3 par le mélange polyphasique 2, sont avantageusement agencés de telle sorte que la hauteur hr des moyens récepteurs soit inférieure à la hauteur hc de la cellule 1 apte à loger le mélange polyphasique 2, comme représenté sur les figures.

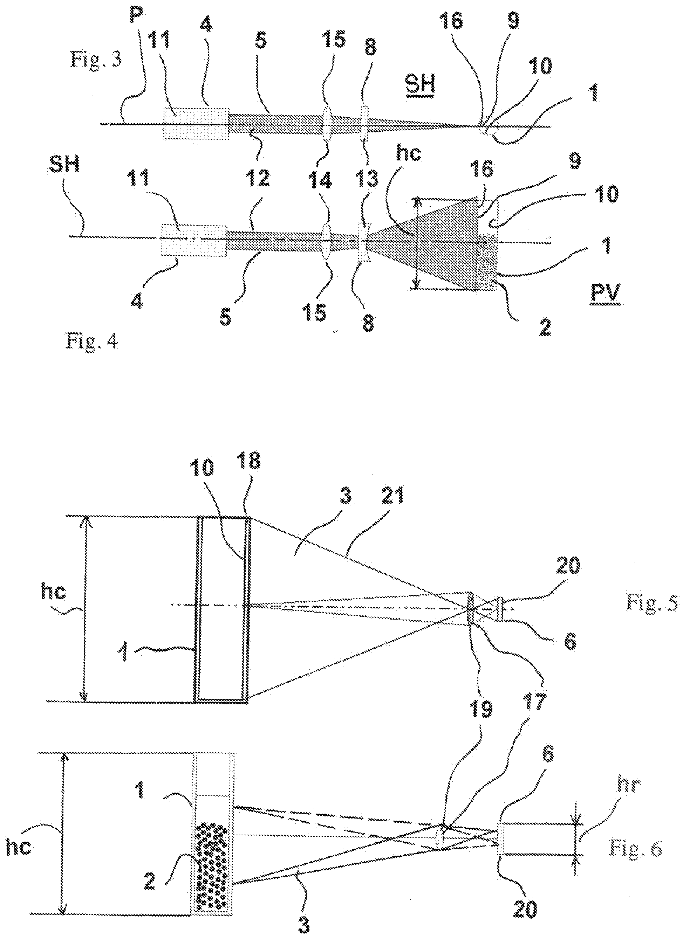

Les moyens optiques de conjugaison 17 sont de préférence placés à une hauteur sensiblement égale à la mi-hauteur de la cellule 1, soit hc / 2, afin de se trouver à égale distance entre les interfaces haute et basse du mélange 2 éclairé lorsque celui-ci rempli totalement la cellule (non représenté sur les figures). En outre, le plan de la lentille biconvexe 19 ou analogue est de préférence placé parallèlement à l'interface 9 éclairée par les moyens émetteurs 4, située entre le mélange 2 et la surface intérieure 10 de la paroi 18 de la cellule 1 en contact avec celui-ci. La lentille biconvexe 19 est définie par son grandissement, et disposée entre le capteur matriciel 20 et la cellule 1, de telle sorte que l'image de la lumière rétrodiffusée s'étendant sur la hauteur de mélange soit transmise au capteur matriciel 20 et corresponde à la hauteur choisie de celui-ci, comme montré sur la figure 5. Un principe similaire est appliqué pour la largeur choisie du capteur matriciel 20, soit pour conjuguer la cellule 1 avec la taille du capteur matriciel 20 en tenant compte de la largeur de cellule selon laquelle on souhaite obtenir des informations relativement à la lumière rétrodiffusée. La figure 1 montre en perspective cette conjugaison. Les figures 6 et 7 montrent les relations biunivoques dans un plan vertical et dans un plan horizontal entre deux points du mélange 2 dont on souhaite obtenir des informations par la lumière qui est rétrodiffusée à partir de ces points, et deux points du capteur matriciel 20.

Comme représenté sur la figure 7, les moyens optiques de conjugaison 17 et le capteur matriciel 20 peuvent avantageusement être placés de manière symétrique par rapport à un plan vertical perpendiculaire à la paroi 18 de la cellule 1 sur laquelle est projeté le faisceau lumineux incident et comprenant la ligne de lumière, ou par rapport à un plan sécant avec le plan défini ci-dessus le long de la ligne de lumière et formant un angle avec ce plan défini ci-dessus.

Sur les figures 1 et 5, on a représenté le champ optique 21 par les traits qui relient les extrémités supérieures et inférieures de la cellule 1 respectivement aux extrémités inférieure et supérieure du capteur matriciel 20, le champ optique étant défini par l'agencement des moyens optiques de conjugaison 17, en fonction du rapport que l'on désire entre la hauteur de cellule 1 et celle du capteur matriciel 20, et également en fonction de la distance séparant la cellule du capteur matriciel 20.

Les figures 2 à 4 montrent un deuxième mode de génération du faisceau lumineux 5 émis en direction de la cellule 1 et comportant des moyens d'extension du faisceau dans le plan vertical. Dans ce mode alternatif, qui diffère du premier mode par une mise en oeuvre différente des moyens émetteurs du faisceau lumineux 5 en direction de la cellule 1, le dispositif selon l'invention comporte avantageusement des moyens de focalisation 14 du faisceau lumineux 5 émis en direction de la cellule 1, pour focaliser ce faisceau lumineux 5, pris dans une section transversale horizontale SH, à son interface 9 entre la surface intérieure 10 de la paroi 18 de la cellule 1 et le mélange polyphasique 2.

Sur ces figures 2 à 4, les moyens émetteurs 4 du faisceau lumineux 5 en direction de la cellule 1 comprennent avantageusement :

- des moyens générateurs 11 d'un faisceau de lumière 12 dont tous les rayons lumineux sont parallèles entre eux, appelé faisceau lumineux collimaté 12, par exemple une source laser collimatée,
- les moyens d'extension 8 du faisceau lumineux 5 émis en direction de la cellule 1 étant interposés entre les moyens générateurs 11 du faisceau lumineux collimaté 12 et la cellule 1, et
- les moyens de focalisation 14 étant disposés entre les moyens générateurs 11 du faisceau de lumière collimatée 12 et les moyens d'extension 8 du faisceau lumineux 5 dans le plan vertical PV.

Les moyens d'extension 8 du faisceau lumineux 5 émis en direction de la cellule 1, comportent par exemple des moyens de lentille divergente sur un axe (cylindrique), par exemple une lentille 13 cylindrique concave divergente verticalement.

Les moyens de focalisation 14 permettent d'obtenir selon l'invention un faisceau lumineux 5 émis en direction de la cellule, à son interface 9 entre la surface intérieure 10 de la paroi 18 de la cellule 1 et le mélange polyphasique 2, qui adopte une forme de ligne verticale 16 dont la largeur est inférieure, de préférence très inférieure, au libre parcours de transport l* du mélange polyphasique 2, comme cela sera détaillé plus loin avec la description des moyens d'analyse 7. Ces moyens de focalisation 14, dans l'exemple des figures 2 à 4, sont constitués de moyens de lentille convergente 15, par exemple une lentille cylindrique convergente au moins horizontalement, dans l'exemple représenté sur ces figures, une lentille biconvexe focalisant le faisceau émis par les moyens générateurs 11 vers un point. Comme représenté sur les figures 2 à 4, le faisceau 5 focalisé traverse ensuite la lentille 13 cylindrique concave divergente verticalement qui procède à la divergence du faisceau 5 dans le plan vertical avant d'atteindre la cellule, sans modifier la convergence dans le plan horizontal du faisceau 5 donnée par la lentille 15, comme montré sur la figure 3. L'agencement des moyens de focalisation 14 permet d'offrir au dispositif selon l'invention une finesse de faisceau lumineux avantageusement modifiable, par exemple par réglage de la position de la lentille ou de la source émettrice par rapport à la cellule.

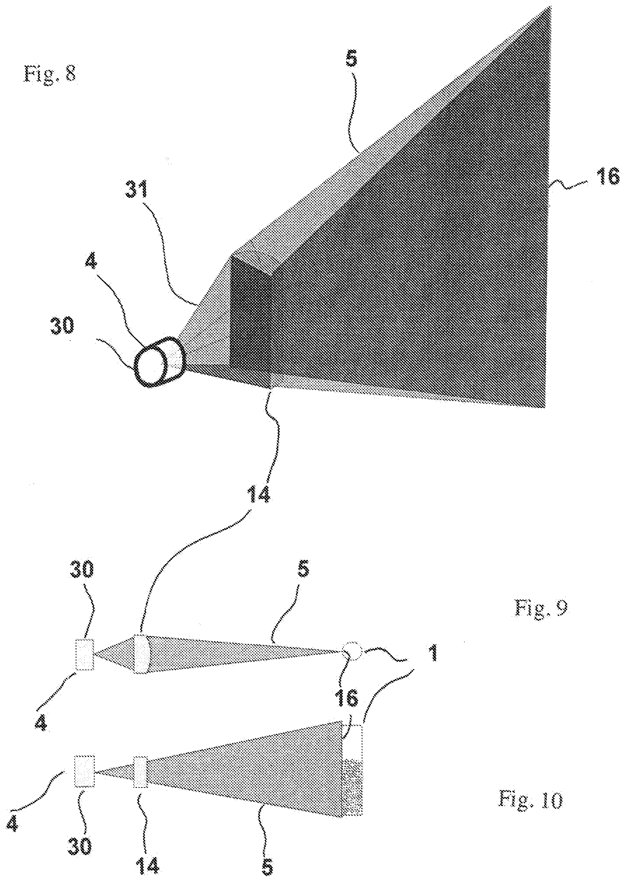

Les figures 8 à 10 montrent un troisième mode de génération d'un faisceau de lumière 5 émis en direction de la cellule 1 et comportant des moyens d'extension du faisceau dans le plan vertical à l'instar des premier et deuxième modes de réalisation. Dans ce troisième mode de réalisation, les moyens générateurs 30 d'un faisceau de lumière 31 divergent, comportent une source laser nue 30 produisant un faisceau initial de lumière divergent dans les plans horizontal et vertical. Ce faisceau lumineux initial est focalisé dans un plan horizontal par des moyens de focalisation 14, constitués par exemple d'une lentille cylindrique convergente horizontalement comme représenté sur les figures 8 et 9.

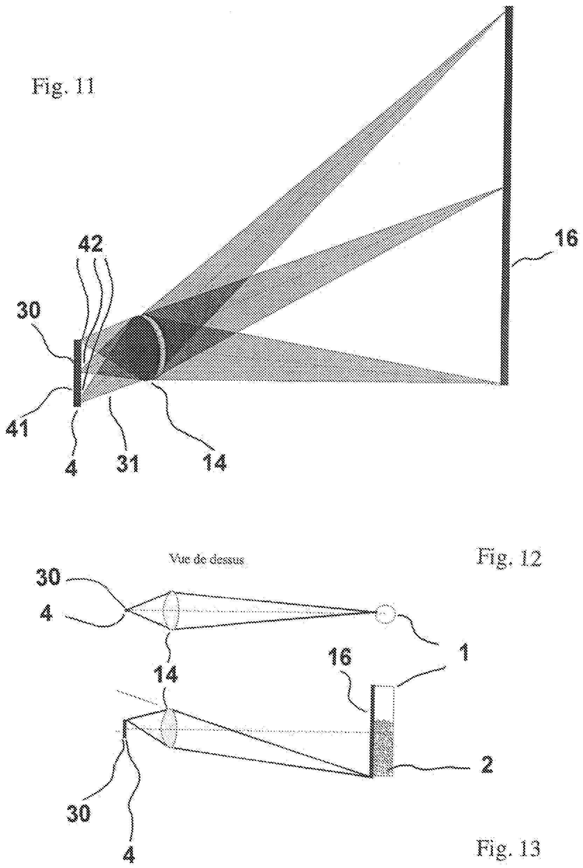

Les figures 11 à 13 montrent un quatrième mode de génération d'un faisceau de lumière 5 émis en direction de la cellule 1 et comportant des moyens d'extension du faisceau dans le plan vertical à l'instar des autres modes de réalisation. Dans ce quatrième mode de réalisation, les moyens générateurs 30 d'un faisceau de lumière 31 divergent, comportent une source lumineuse 41 linéaire comportant une pluralité de sources lumineuses ponctuelles 42 divergentes juxtaposées produisant un faisceau initial de lumière divergent dans les plans horizontal et vertical. Ce faisceau lumineux initial est focalisé dans un plan horizontal par des moyens de focalisation 14, constitués par exemple d'une lentille convergente de conjugaison comme représenté sur les figures 11 à 13.

Ci-dessus, il a été décrit plusieurs modes de réalisation des moyens émetteurs du faisceau de lumière 5 émis vers la cellule 1. Cependant, tout moyen de projection d'une ligne de lumière est utilisable, par exemple, la projection d'un masque en forme de ligne de type diapositive. Il n'est pas nécessaire d'utiliser une source de lumière cohérente, telle que l'est le laser. Le laser est avantageux car il permet d'obtenir relativement aisément un fin faisceau de lumière ayant une intensité lumineuse forte.

La ligne de lumière 16 peut avoir une largeur qui lui confère une forme de rectangle allongé. Le rectangle apporte l'intérêt de moyenner optiquement une éventuelle irrégularité du mélange lui-même. Pour analyser la stabilité de produits vis-à-vis de la gravité, cette forme ne peut être qu'un étirement d'un profil quelconque le long de l'axe vertical. La longueur d'onde de la lumière peut être choisie en fonction par exemple de l'absorption spectrale du produit. Il est en effet souvent avantageux de travailler avec une longueur d'onde pour laquelle le produit est peu absorbant. Par exemple le proche infrarouge pour les produits pétroliers. Chaque point lumineux de cette ligne de lumière 16 va plus ou moins s'étaler horizontalement en fonction des propriétés diffusives locales du produit. Ainsi la ligne de lumière 16 presque parfaite va se déformer, s'élargir plus ou moins. Cette déformation le long de la hauteur, capté par le capteur matriciel 20 via les moyens optiques de conjugaison 17, va renseigner sur les variations de propriétés diffusives du produit le long de la hauteur.

Le capteur matriciel 20 peut être issu d'une matrice 2D de type CCD ou CMOS. Un éloignement entre le capteur matriciel 20 et la cellule 1 entraîne immédiatement une forte perte de résolution spatiale de la mesure. En effet, la lumière rétrodiffusée est par essence constituée de rayons qui repartent dans toutes les directions et ainsi un éloignement du capteur entraîne un fort effet de flou. Pour avoir une capture de signal correcte sans cette optique de conjugaison, il faudrait mettre le capteur contre le flacon ce qui bien sûr gène l'injection de lumière. Le capteur pourrait être transparent, ce qui est possible, mais pas de façon standard et donc provoquerait un surcoût très important. Il est possible d'utiliser un capteur vidéo très peu onéreux. Le caractère flexible (finesse de la ligne de lumière incidente modifiable, focale imagerie adaptable, divers choix de résolution de la caméra) permet d'adapter facilement le dispositif selon l'invention à une famille de produits chimiques donnée et de concevoir aisément une gamme d'instruments pour ces familles, par exemple pour les produits très diffusant (haute résolution). Le dispositif selon l'invention permet donc une bonne adéquation au marché. La mesure peut être faite à travers un hublot ce qui permet de mettre la cellule contenant le mélange à analyser dans une enceinte de volume raisonnable (de l'ordre de 1 dm$^3$). Ce faible volume autorise une réalisation aisée d'une régulation thermique et/ou du taux d'humidité ou autre.

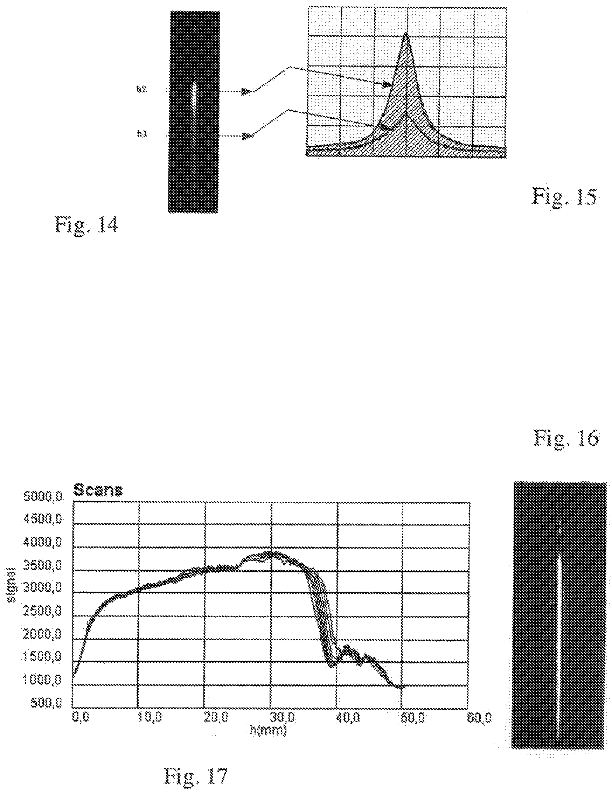

Les moyens d'analyse 7 de la partie du faisceau de lumière rétrodiffusée 3 par le mélange polyphasique 2 et reçue par le capteur matriciel 6 via les moyens optiques de conjugaison 17, vont maintenant être décrits avec l'aide des figures 14 à 15.

Les figures 14 à 22 montrent des exemples de mélange analysé avec un dispositif tel que décrit plus haut.

Plusieurs algorithmes peuvent être utilisés pour traiter l'image obtenue sur le capteur matriciel 20. La présente invention, comme représenté sur les figures 14 et 15, comporte de sélectionner les pixels d'une ligne horizontale du capteur matriciel 20, correspondant à une hauteur donnée h1, h2, etc ... sur la cellule 1. On obtient ainsi une courbe (figure 15) d'intensité lumineuse (en ordonnée) en fonction de la coordonnée transverse (en abscisse) pour chaque hauteur h1, h2, etc. On appelle cette courbe « profil transverse ».

Des traitements intéressants sont ceux qui donnent pour chaque mesure, soit une illumination sur la hauteur de mélange analysé à un instant t, une courbe fonction de la coordonnée verticale (hauteur). Pour faire cela, il faut transformer chaque « profil transverse » en un simple nombre représentatif des propriétés diffusives du produit analysé.

Un premier exemple de traitement de « profil transverse » serait simplement la valeur de l'intensité lumineuse au centre du profil.

Un autre exemple serait de mesurer la largeur du « profil transverse ». Par exemple la largeur à mi-hauteur de chaque courbe sur la figure 15, ou encore la largeur d'une courbe gaussienne ajustée au profil, ou bien encore une largeur statistique : $LX = [\int I(x)x^2 dx / \int I(x)dx]^{1/2}$ avec $I(x)$ représentant l'intensité lumineuse du profil pour la coordonnée transverse x (avec origine au centre du profil).

Il est connu que l'intensité lumineuse d'un point P éloigné par une distance r d'une source lumineuse ponctuelle S, suit la loi suivante :

$$I(r) = I_0 / r^3,$$

avec $I_0$ représentant l'intensité lumineuse à la source ponctuelle S.

Le demandeur a constaté que l'illumination du milieu analysé suivant une ligne de lumière provoque en rétrodiffusion des perturbations de la lumière rétrodiffusée captée par les moyens récepteurs, consistant en la fusion de la lumière rétrodiffusée par un point déterminé du mélange illuminé, avec la lumière simultanément rétrodiffusée par les points adjacents supérieurs et inférieurs au point considéré. Ces perturbations modifient la nature du signal rétrodiffusé capté, et donc il y a avantageusement lieu de proposer des moyens spécifiques d'analyse sur la hauteur de cellule illuminée, qui prennent en compte ces perturbations.

Le demandeur a constaté que, en l'absence d'aborption, l'intensité lumineuse d'un point P éloigné par une distance x, pour x >> l*, d'une ligne de lumière L, ne suit pas la loi ci-dessus, mais répond à une loi différente, comme suit :

$$I(x) = 2I_0/x^2,$$

la décroissance étant proportionnelle au carré de la distance à la source, avec $I_0$ représentant l'intensité lumineuse à la source ponctuelle L.

La présente invention comporte de donner l'intégrale de l'intensité lumineuse de ces « profils transverses », comme représenté sur la figure 15 en zone hachurée. Cela donne une bonne signature globale des variations des propriétés diffusives du produit en fonction de la hauteur. L'avantage de ce traitement par rapport premier (hauteur au centre seulement) est qu'il effectue en même temps une moyenne le long de l'axe transverse, ce qui réduit beaucoup le bruit de mesure.

Au dehors de la présente invention, il est possible d'appliquer des traitements plus sophistiqués, par exemple une modélisation empirique ou théorique de la forme du profil transversal qui comprend le paramètre longueur de transport noté l* ou encore le paramètre longueur d'absorption noté $l_a$ : $I(x) = f(l^*, l_a, x)$. Ainsi on peut procéder à un ajustement de ce profil théorique à chaque « profil transverse » obtenu par un des dispositifs décrits plus haut et ainsi obtenir une série de nombres l* et éventuellement $l_a$ pour chaque coordonnée verticale.

Le dispositif dont plusieurs exemples de mise en oeuvre ont été décrits plus haut, permet, grâce à la combinaison de l'injection d'une ligne de lumière étroite sur le produit analysé, dont la largeur est avantageusement inférieure au l* et en outre au $l_a$ du produit analysé, de donner une mesure à la fois de l'absorption (longueur $l_a$) et de la diffusion (longueur l*).

Il y a lieu de rappeler que l* est le libre parcours moyen équivalent pour une diffusion isotrope, ou autrement dit la distance à partir de laquelle le photon qui rentre dans le produit a perdu complètement sa direction initiale. l* est le paramètre physique standard pour caractériser les propriétés diffusives du produit. Si on connaît l*, la concentration et les indices optiques, on peut par exemple calculer le diamètre des particules par des méthodes connues de l'homme du métier. Rappelons également que $l_a$ est la longueur du trajet du photon avant d'être absorbé ; sa valeur est infinie pour les produits blancs et tend vers zéro pour les produits sombres.

Il est ainsi préférable d'utiliser une ligne de lumière très fine (largeur << l*) pour avoir une forme de profil qui dépend bien des propriétés diffusives du produit et non pas du profil de la ligne de lumière elle-même.

Grâce à l'éloignement de quelques centimètres entre l'ensemble des moyens émetteurs 4 et des moyens récepteurs 6 d'une part, et la cellule 1 d'autre part, il est possible de construire aisément un dispositif qui analyse la stabilité de plusieurs échantillons à la fois avec une seule tête optique. Par tête optique, on entend une partie du dispositif d'analyse comportant les moyens émetteurs 4, les moyens récepteurs 6, et les moyens optiques de conjugaison 17. Par exemple, on peut concevoir une sorte de carrousel qui permet de loger plusieurs cellules, ou bien un alignement de cellules sur un support rectiligne (non représentés). Dans l'exemple de configuration « multi-récipients » utilisant une sorte de carrousel, la tête optique tourne au centre du carrousel de façon à mesurer successivement chaque cellule ou flacon de produit ou mélange à analyser. Les éventuels désalignements dus aux défauts mécaniques du système rotatif peuvent parfaitement être corrigés par logiciel. Dans l'exemple de configuration « multi-récipients » utilisant un support linéaire de cellule, soit la tête optique se déplace, soit le support de cellule, en translation l'un par rapport à l'autre de façon à mesurer successivement chaque cellule de produit.

Les figures 16, 17, et 18 représentent un premier exemple d'utilisation d'un dispositif tel que décrit plus haut, pour l'étude de la sédimentation d'une suspension de Dioxyde de Titane (TiO2) dans de l'eau. L'expérience faite est la suivante : la suspension a une fraction volumique de 3,8 %. La taille moyenne des particules de dioxyde de Titane est de 2 micromètres. La suspension est placée dans un récipient cylindrique de 28 mm de diamètre et de 50 mm de haut, comportant une paroi transparente. La suspension est d'abord homogénéisée puis placée dans un dispositif d'analyse selon l'invention. Une mesure sur toute la hauteur en rétrodiffusion est effectuée toutes les 10 minutes pendant 13 heures. La figure 17 représente une série de courbes obtenues après avoir utilisé le traitement qui donne en ordonnée la valeur de la surface sous les « profils transverses » pour chaque hauteur de cellule définie en abscisse, comme décrit précédemment.

La figure 16 représente l'aspect d'une image de la figure de diffusion. Il s'agit d'une image brute. Sur les courbes de la figure 17, on observe une variation de la partie droite du profil (partie haute de la suspension) qui indique bien une descente progressive du front de sédimentation.

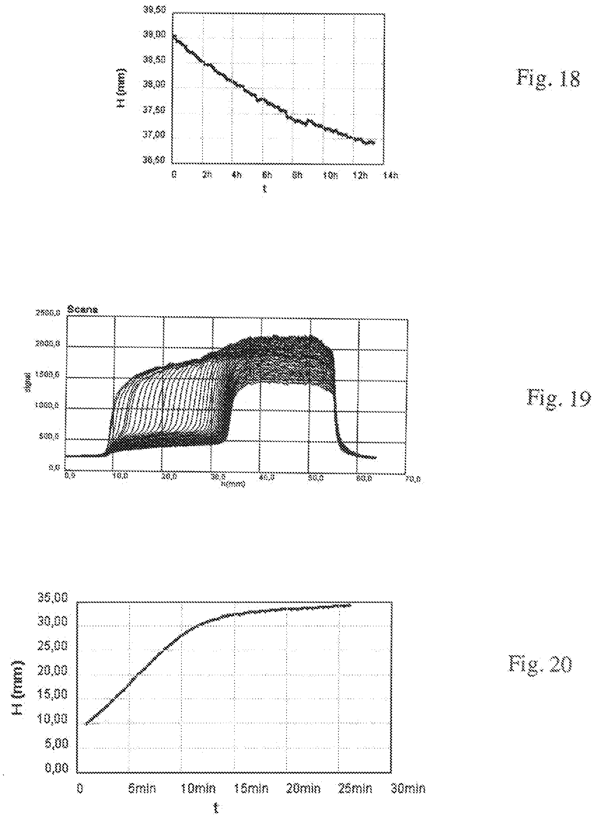

On peut par exemple donner la vitesse de sédimentation en traçant la hauteur du front de sédimentation en fonction du temps, comme représenté sur la figure 18 sur laquelle la pente de la courbe correspond à la vitesse de sédimentation. On trouve ici par exemple que la vitesse de sédimentation est de 184,6 micromètres par heure en moyenne.

Les figures 19 et 20 représentent un deuxième exemple d'utilisation d'un dispositif selon l'invention tel que décrit plus haut, relatif à un exemple de mesure de crémage d'une émulsion durant 26 minutes en utilisant le traitement « intégrale sous le profil » de la présente invention décrit plus haut. Les gouttes d'huile moins denses que l'eau montent vers la surface. La figure 19 montre une série de courbes obtenues après avoir utilisé le traitement qui donne en ordonnée la valeur de la surface sous les « profils transverses » pour chaque hauteur définie en abscisse. La figure 20 montre la hauteur du front de crémage (en ordonnée) en fonction du temps (en abscisse). La pente de la courbe représente la vitesse de crémage.

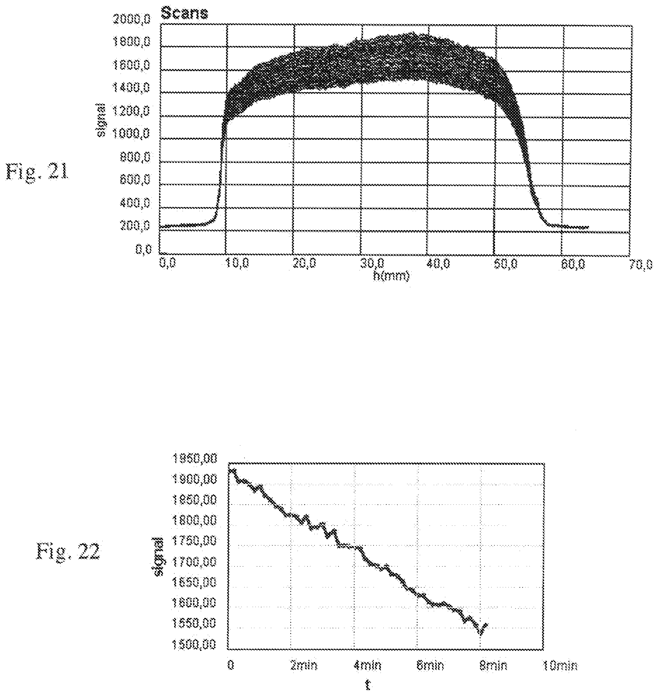

Les figures 21 et 22 représentent un troisième exemple d'utilisation d'un dispositif selon l'invention tel que décrit plus haut, relatif à un exemple de mesure de la coalescence d'une émulsion durant 8 minutes en utilisant le traitement « intégrale sous le profil » de la présente invention décrit plus haut. Les gouttes d'huile se rassemblent pour former de plus grosses gouttes. La variation de taille modifie la hauteur du signal. Il n'y a pas de migration de particule, donc le signal reste uniforme. La figure 21 montre une série de courbes obtenues pour une coalescence de gouttes. La figure 22 représente la cinétique qui montre la chute du signal.

**Revendications**

1. Dispositif d'analyse d'un mélange polyphasique (2) via un faisceau de lumière rétrodiffusée (3) par celui-ci, comprenant:

   - ledit mélange polyphasique (2);
   - une cellule (1) dotée d'une composante de contenance d'extension verticale, apte à loger le mélange polyphasique,
   - des moyens émetteurs (4) d'un faisceau lumineux (5) en direction de la cellule, de telle sorte que le faisceau lumineux s'étende dans un plan vertical (PV) couvrant au moins une hauteur (hc) de la cellule logeant le mélange polyphasique (2),
   - des moyens récepteurs (6) d'une partie au moins du faisceau de lumière rétrodiffusée (3) par ledit mélange polyphasique, couvrant une hauteur de faisceau de lumière rétrodiffusée (3) s'étendant sur la hauteur (hc) de cellule logeant le mélange polyphasique (2),
   - des moyens optiques de conjugaison (17), disposés entre la cellule (1) et les moyens récepteurs (6) d'une partie au moins du faisceau de lumière rétrodiffusée (3) par le mélange polyphasique (2),
   - lesdits moyens récepteurs (6) comportant un capteur matriciel (20) doté d'une pluralité de pixels formant une surface de réception de ladite partie au moins du faisceau de lumière rétrodiffusée, s'étendant selon une direction verticale et une direction horizontale,
   - des moyens d'analyse (7) de ladite partie au moins du faisceau de lumière rétrodiffusée (3) par le mélange polyphasique (2) et reçue par le capteur matriciel (20) via les moyens optiques de conjugaison (17),
   - le faisceau lumineux (5) émis en direction de la cellule, à son interface (9) entre la surface intérieure (10) de la paroi (18) de la cellule (1) et le mélange polyphasique (2), adoptant une forme de ligne verticale (16) dont la largeur est inférieure, de préférence très inférieure, au libre parcours de transport (l*) du mélange polyphasique (2),
   - les moyens d'analyse (7) comprenant la sélection des pixels d'une ligne horizontale du capteur matriciel (20) correspondant à une hauteur donnée (h1,h2), ladite sélection résultant en l'obtention d'un profil transverse d'intensité lumineuse desdits pixels, et le calcul de l'intégrale du profil transverse d'intensité lumineuse, représentatif des propriétés diffusives du mélange polyphasique à la hauteur (h1, h2) donnée.

2. Dispositif selon la revendication 1, **caractérisé en ce que** les moyens optiques de conjugaison (17) comportent des moyens collecteurs et focalisateurs de ladite partie au moins du faisceau de lumière rétrodiffusée, du type lentille biconvexe.

3. Dispositif selon la revendication 1 ou 2, **caractérisé en ce que** les moyens optiques de conjugaison (17), disposés entre la cellule (1) et les moyens récepteurs (6) du faisceau de lumière rétrodiffusée (3) par le mélange polyphasique (2), sont agencés de telle sorte que la hauteur (hr) des moyens récepteurs soit inférieure à la hauteur (hc) de cellule apte à loger ledit mélange polyphasique.

4. Dispositif selon l'une quelconque des revendications 1 à 3, **caractérisé en ce qu'**il comporte en outre des moyens de focalisation (14) du faisceau lumineux (5) émis en direction de la cellule (1), pour focaliser ledit faisceau lumineux, pris dans une section transversale horizontale (SH), à son interface (9) entre la surface intérieure (10) de la paroi (18) de la cellule (1) et le mélange polyphasique (2).

5. Dispositif selon l'une quelconque des revendications 1 à 4, **caractérisé en ce qu'**il comporte en outre des moyens d'extension (8) du faisceau lumineux émis en direction de la cellule (1), pour étendre ce dernier dans un plan vertical (PV) couvrant au moins la hauteur (hc) de cellule (1) apte à loger ledit mélange polyphasique (2), de telle sorte que le faisceau lumineux soit divergent dans ledit plan vertical (PV) à son interface (9) entre la surface intérieure (10) de la paroi (18) de la cellule (1) et le mélange polyphasique (2).

6. Dispositif selon la revendication 5, **caractérisé en ce que** lesdits moyens émetteurs (4) du faisceau lumineux (5) en direction de la cellule (1) comprennent:

   - des moyens générateurs (11) d'un faisceau de lumière (12) dont tous les rayons lumineux sont parallèles entre eux,
   - lesdits moyens d'extension (8) du faisceau lumineux (5) émis en direction de la cellule (1) étant interposés entre lesdits moyens générateurs (11) d'un faisceau lumineux collimaté (12) et la cellule (1).

**7.** Dispositif selon la revendication 5 ou 6, **caractérisé en ce que** lesdits moyens d'extension (8) du faisceau lumineux (5) émis en direction de la cellule (1), comportent des moyens de lentille (13) cylindrique concave divergente verticalement.

**8.** Dispositif selon la revendication 4 et l'une des revendications 5 à 7, **caractérisé en ce que** lesdits moyens de focalisation (14) sont disposés entre les moyens générateurs (11) du faisceau de lumière collimatée (12) et les moyens d'extension (8) du faisceau lumineux (5) dans le plan vertical (PV).

**9.** Dispositif selon la revendication 5, **caractérisé en ce que** lesdits moyens émetteurs (4) du faisceau lumineux (5) en direction de la cellule (1) comprennent des moyens générateurs (30) d'au moins un faisceau de lumière (31) divergent.

**10.** Dispositif selon la revendication 4, ou l'une des revendications 5 à 9 prise en combinaison avec la revendication 4, **caractérisé en ce que** lesdits moyens de focalisation (14) comprennent des moyens de lentille convergente (15).

**11.** Dispositif selon la revendication 10 lorsqu'elle dépend de la revendication 9, **caractérisé en ce que** lesdits moyens de focalisation (14) comprennent des moyens de lentille cylindrique convergente horizontalement.

**12.** Dispositif selon la revendication 9, **caractérisé en ce que** lesdits moyens générateurs (30) d'au moins un faisceau de lumière (31) divergent, comportent une source lumineuse (41) linéaire.

**13.** Dispositif selon la revendication 12, **caractérisé en ce que** ladite source lumineuse (41) linéaire comporte une pluralité de sources lumineuses ponctuelles (42) divergentes.

**14.** Dispositif selon l'une quelconque des revendications 1 à 13, **caractérisé en ce que** la cellule apte à loger ledit mélange polyphasique adopte une forme cylindrique verticale droite.

**15.** Dispositif selon la revendication 14, **caractérisé en ce que** la cellule de forme cylindrique verticale droite adopte une section transversale circulaire.

**Patentansprüche**

**1.** Vorrichtung zur Analyse eines Mehrphasengemisches (2) über ein durch dieses zurückgestreutes Lichtbündel (3), umfassend:

- das Mehrphasengemisch (2),
- eine Zelle (1), die mit einer Kapazitätskomponente mit vertikaler Erstreckung versehen ist, die imstande ist, das Mehrphasengemisch aufzunehmen,
- Mittel zum Aussenden (4) eines Lichtbündels (5) in Richtung auf die Zelle, so dass sich das Lichtbündel in einer vertikalen Ebene (PV) erstreckt, die wenigstens eine Höhe (hc) der Zelle abdeckt, die das Mehrphasengemisch (2) aufnimmt,
- Mittel zum Empfangen (6) von wenigstens einem Teil des durch das Mehrphasengemisch zurückgestreuten Lichtbündels (3), die eine Höhe des zurückgestreuten Lichtbündels (3) abdecken, die sich über die Höhe (hc) der Zelle erstreckt, die das Mehrphasengemisch (2) aufnimmt,
- optische Konjugationsmittel (17), die zwischen der Zelle (1) und den Mitteln zum Empfangen (6) von wenigstens einem Teil des durch das Mehrphasengemisch (2) zurückgestreuten Lichtbündels (3) angeordnet ist,
- wobei die Mittel zum Empfangen (6) einen Matrixsensor (20) beinhalten, der mit einer Vielzahl von Pixeln versehen ist, die eine Oberfläche zum Empfangen von wenigstens dem Teil des zurückgestreuten Lichtbündels bilden, und die sich in einer vertikalen Richtung und einer horizontalen Richtung erstrecken,
- Mittel zur Analyse (7) von wenigstens dem Teil des Lichtbündels (3), das durch das Mehrphasengemisch (2) zurückgestreut wird und durch den Matrixsensor (20) über die optischen Konjugationsmittel (17) empfangen wird,
- wobei das in Richtung der Zelle ausgesendete Lichtbündel (5) an seiner Schnittstelle (9) zwischen der Innenfläche (10) der Wand (18) der Zelle (1) und dem Mehrphasengemisch (2) die Form einer vertikalen Linie (16) aufweist, deren Breite kleiner, vorzugsweise viel kleiner, als der freie Transportweg (1*) des Mehrphasengemisches (2) ist,
- wobei die Analysemittel (7) die Auswahl der Pixel einer horizontalen Linie des Matrixsensors (20) beinhalten, die einer gegebenen Höhe (h1, h2) entspricht, wobei die Auswahl zum Erhalt eines transversalen Lichtintensitätsprofils der Pixel und zur Berechnung des Integrals des transversalen Lichtintensitätsprofils führt, das für die streuenden Eigenschaften des Mehrphasengemisches in der gegebenen Höhe (h1, h2) repräsentativ ist.

2. Vorrichtung nach Anspruch 1, **dadurch gekennzeichnet, dass** die optischen Konjugationsmittel (17) Mittel zum Sammeln und Fokussieren von wenigstens dem Teil des zurückgestreuten Lichtbündels vom Typ bikonvexe Linse beinhalten.

3. Vorrichtung nach Anspruch 1 oder 2, **dadurch gekennzeichnet, dass** die optischen Konjugationsmittel (17), die zwischen der Zelle (1) und den Mitteln zum Empfangen (6) des durch das Mehrphasengemisch (2) zurückgestreuten Lichtbündels (3) angeordnet sind, derart eingerichtet sind, dass die Höhe (hr) der Empfangsmittel geringer ist als die Höhe (hc) der Zelle, die imstande ist, das Mehrphasengemisch aufzunehmen.

4. Vorrichtung nach einem der Ansprüche 1 bis 3, **dadurch gekennzeichnet, dass** sie ferner Mittel zum Fokussieren (14) des in Richtung auf die Zelle (1) ausgesendeten Lichtbündels (5) beinhaltet, um das Lichtbündel, in einem horizontalen Querschnitt (SH) betrachtet, an seiner Schnittstelle (9) zwischen der Innenfläche (10) der Wand (18) der Zelle (1) und dem Mehrphasengemisch (2) zu fokussieren.

5. Vorrichtung nach einem der Ansprüche 1 bis 4, **dadurch gekennzeichnet, dass** es ferner Mittel zur Erstreckung (8) des in Richtung auf die Zelle (1) ausgesendeten Lichtbündels beinhaltet, um dieses in einer vertikalen Ebene (PV) zu erstrecken, die wenigstens die Höhe (hc) der Zelle (1) abdeckt, die imstande ist, das Mehrphasengemisch (2) aufzunehmen, so dass das Lichtbündel in der vertikalen Ebene (PV) an seiner Schnittstelle (9) zwischen der Innenfläche (10) der Wand (18) der Zelle (1) und dem Mehrphasengemisch (2) divergiert.

6. Vorrichtung nach Anspruch 5, **dadurch gekennzeichnet, dass** die Mittel zum Aussenden (4) des Lichtbündels (5) in Richtung auf die Zelle (1) Folgendes umfassen:

    - Mittel zum Erzeugen (11) eines Lichtbündels (12), bei dem alle Lichtstrahlen zueinander parallel sind,
    - wobei die Mittel zum Erstrecken (8) des in Richtung auf die Zelle (1) ausgesendeten Lichtbündels (5) zwischen den Mitteln zum Erzeugen (11) eines kollimierten Lichtbündels (12) und der Zelle (1) angeordnet sind.

7. Vorrichtung nach Anspruch 5 oder 6, **dadurch gekennzeichnet, dass** die Mittel zum Erstrecken (8) des in Richtung auf die Zelle (1) ausgesendeten Lichtbündels (5) vertikal divergierende konkave zylindrische Linsenmittel (13) beinhalten.

8. Vorrichtung nach Anspruch 4 und einem der Ansprüche 5 bis 7, **dadurch gekennzeichnet, dass** die Mittel zum Fokussieren (14) zwischen den Mitteln zum Erzeugen (11) des kollimierten Lichtbündels (12) und den Mitteln zum Erstrecken (8) des Lichtbündels (5) in der vertikalen Ebene (PV) angeordnet sind.

9. Vorrichtung nach Anspruch 5, **dadurch gekennzeichnet, dass** die Mittel zum Aussenden (4) des Lichtbündels (5) in Richtung auf die Zelle (1) Mittel zum Erzeugen (30) von wenigstens einem divergierenden Lichtbündel (31) umfassen.

10. Vorrichtung nach Anspruch 4 oder einem der Ansprüche 5 bis 9 in Kombination mit Anspruch 4, **dadurch gekennzeichnet, dass** die Mittel zum Fokussieren (14) konvergierende Linsenmittel (15) umfassen.

11. Vorrichtung nach Anspruch 10, wenn er von Anspruch 9 abhängt, **dadurch gekennzeichnet, dass** die Mittel zum Fokussieren (14) horizontal konvergierende zylindrische Linsenmittel umfassen.

12. Vorrichtung nach Anspruch 9, **dadurch gekennzeichnet, dass** die Mittel zum Erzeugen (30) von wenigstens einem divergierenden Lichtbündel (31) eine lineare Lichtquelle (41) beinhalten.

13. Vorrichtung nach Anspruch 12, **dadurch gekennzeichnet, dass** die lineare Lichtquelle (41) eine Vielzahl von divergierenden Punktlichtquellen (42) beinhaltet.

14. Vorrichtung nach einem der Ansprüche 1 bis 13, **dadurch gekennzeichnet, dass** die Zelle, die imstande ist, das Mehrphasengemisch aufzunehmen, die Form eines geraden vertikalen Zylinders aufweist.

15. Vorrichtung nach Anspruch 14, **dadurch gekennzeichnet, dass** die Zelle in Form eines geraden vertikalen Zylinders einen kreisförmigen Querschnitt aufweist.

**Claims**

1. Device for analyzing a polyphase mixture (2) via a light beam (3) backscattered by said mixture, comprising:

    - said polyphase mixture (2);
    - a cell (1) having a capacity component of vertical extent, capable of containing the polyphase mixture,
    - means (4) for emitting a light beam (5) in the direction of the cell, so that the light beam extends in a vertical plane (PV) covering at least a height (hc) of the cell containing the polyphase mixture (2),

- means (6) for receiving at least a part of the light beam (3) backscattered by said polyphase mixture, covering a backscattered light beam (3) height extending over the height (hc) of the cell containing the polyphase mixture (2),

- optical conjugation means (17) arranged between the cell (1) and the means (6) for receiving at least a part of the light beam (3) backscattered by the polyphase mixture (2),

- said means (6) for receiving comprising a matrix sensor (20) provided with a plurality of pixels, forming a surface for receiving said at least part of the backscattered light beam, extending along a vertical direction and a horizontal direction,

- means (7) for analyzing said at least part of the light beam (3) backscattered by the polyphase mixture (2) and received by the matrix sensor (20) via the optical conjugation means (17),

- the light beam (5) emitted in the direction of the cell having, at its interface (9) between the inner surface (10) of the wall (18) of the cell (1) and the polyphase mixture (2), a vertical line shape (16) whose width is less, preferably very much less, than the free transport path (l*) of the polyphase mixture (2),

- the means (7) for analyzing comprising the selection of pixels of an horizontal line of the matrix sensor (20) corresponding to a given height (h1, h2), said selection resulting in obtaining a transverse profile of light intensity of said pixels, and the calculation of the integral of the transverse profile of light intensity, representative of the diffusing properties of the polyphase mixture at the given height (h1, h2).

2. Device according to claim 1, **characterized in that** the optical conjugation means (17) comprise means for collecting and focusing said at least part of the backscattered light beam, of the biconvex lens type.

3. Device according to claims 1 or 2, **characterized in that** the optical conjugation means (17), arranged between the cell (1) and the means (6) for receiving the light beam (3) backscattered by the polyphase mixture (2), are arranged so that the height (hr) of the receiver means is less than the height (hc) of the cell capable of containing said polyphase mixture.

4. Device according to any of claims 1 to 3, **characterized in that** it furthermore comprises means (14) for focusing the light beam (5) emitted in the direction of the cell (1), in order to focus said light beam, taken in a horizontal cross section (SH), at its interface (9) between the inner surface (10) of the wall (18) of the cell (1) and the polyphase mixture (2).

5. Device according to any of claims 1 to 4, **characterized in that** it furthermore comprises means (8) for extending the light beam emitted in the direction of the cell (1), in order to extend said beam in a vertical plane (PV) covering at least the height (hc) of the cell capable of containing said polyphase mixture (2), so that the light beam is divergent in said vertical plane (PV) at its interface (9) between the inner surface (10) of the wall (18) of the cell (1) and the polyphase mixture (2).

6. Device according to claim 5, **characterized in that** said means (4) for emitting the light beam (5) in the direction of the cell (1) comprise:

- means (11) for generating a light beam (12), all the light rays of which are mutually parallel,
- said means (8) for extending the light beam (5) emitted in the direction of the cell (1) being interposed between said means (11) for generating a collimated light beam (12) and the cell (1).

7. Device according to claim 5 or 6, **characterized in that** said means (8) for extending the light beam (5) emitted in the direction of the cell (1) comprise vertically divergent concave cylindrical lens means (13).

8. Device according to claim 4 and one of claims 5 to 7, **characterized in that** said focusing means (14) are arranged between the means (11) for generating the beam of collimated light (12) and the means (8) for extending the light beam (5) in the vertical plane (PV).

9. Device according to claim 5, **characterized in that** said means (4) for emitting the light beam (5) in the direction of the cell (1) comprise means (30) for generating at least one divergent light beam (31).

10. Device according to claim 4, or one of claims 5 to 9 taken in combination with claim 4, **characterized in that** said focusing means (14) comprise convergent lens means (15).

11. Device according to claim 10 when dependent of claim 9, **characterized in that** said focusing means (14) comprise horizontally convergent cylindrical lens means.

12. Device according to claim 9, **characterized in that** said means (30) for generating at least one divergent light beam (31) comprise a linear light source (41).

13. Device according to claim 12, **characterized in that** said linear light source (41) comprises a plurality of divergent point light sources (42).

14. Device according to any of claims 1 to 13, **charac-**

**terized in that** the cell capable of containing said polyphase mixture has a vertical right cylindrical shape.

15. Device according to claim 14, **characterized in that** the cell of vertical right cylindrical shape has a circular cross section.

Fig. 1

Fig. 2

Fig. 3

Fig. 4

Fig. 5

Fig. 6

Fig. 7

Fig. 8

Fig. 9

Fig. 10

Fig. 11

42

30

41

4   31   14

16

Vue de dessus   Fig. 12

30

4

14

16   1

30   2

4   Fig. 13

Fig. 14

Fig. 15

Fig. 16

Fig. 17

Fig. 18

Fig. 19

Fig. 20

Fig. 21

Fig. 22

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20020147563 A
- EP 1241467 A
- WO 2008092537 A
- FR 2841983